# EUROPEAN PATENT APPLICATION

(11) **EP 4 794 303 A1**
(43) Date of publication of application: **19.08.2026**
(21) Application number: 25305204.7
(22) Date of filing: 17.02.2025
(51) Int. Cl.: H04L 67/12, H04L 67/131

(54) **METHOD FOR ADAPTIVE SENSORS DATA FOR REMOTE XR SPATIAL COMPUTING**

(71) Applicant: InterDigital CE Patent Holdings, SAS, 75017 Paris (FR)
(72) Inventor: FONTAINE, Loic, 35530 Noyal sur Vilaine (FR); HIRTZLIN, Patrice, 35830 Betton (FR); LELIEVRE, Sylvain, 35760 Montgermont (FR); JOUET, Pierrick, 35000 Rennes (FR); FAIVRE D'ARCIER, Etienne, 35750 Saint Gonlay (FR); ONNO, Stephane, 35760 Saint Gregoire (FR); PERIARD, Francois, Montreal H3T IL7 (CA); HUDON, Mario, Brossard J4Z 0T7 (CA); HAMZA, Ahmed, Coquitlam V3J 3X5 (CA)
(74) Representative: Vossius & Partner Patentanwälte Rechtsanwälte mbB

(57) **Abstract**

In example methods and apparatus, during an extended reality, XR, spatial computing session between the UE and a server, at least a first sensor data stream is provided from the UE to the server using at least a first sensor data setting. Information indicating an updated first sensor data setting is communicated between the UE and the server. In response to the communication between the UE and the server, the first sensor data setting is updated to the updated first sensor data setting. The UE then continues to provide the first sensor data stream from the UE to the server using the updated first sensor data setting.

## Description

### BACKGROUND

The present disclosure relates to apparatus and methods that involve extended reality (XR) devices in communication with an application server (AS).

This Background section describes XR spatial computing functions, relevant metrics for XR spatial computing, and 3GPP architecture for XR spatial computing.

XR Spatial Computing includes functions such as tracking to estimate the movement of the XR device at a high frequency, relocalization to estimate the pose of the XR device, augmented reality (AR) anchoring to insert virtual content in the user's real environment by estimating the pose(s) of a Trackable(s), 3D model reconstruction to reconstruct the surrounding space, light extraction, and semantic perception to process the captured information into semantical concepts. XR spatial computing functions process sensor data to generate information about the world 3D space surrounding the AR user. The resulting output of spatial computing is a set of spatial mapping information that is organized in a data structure called the XR Spatial Description for storing and exchanging the information.

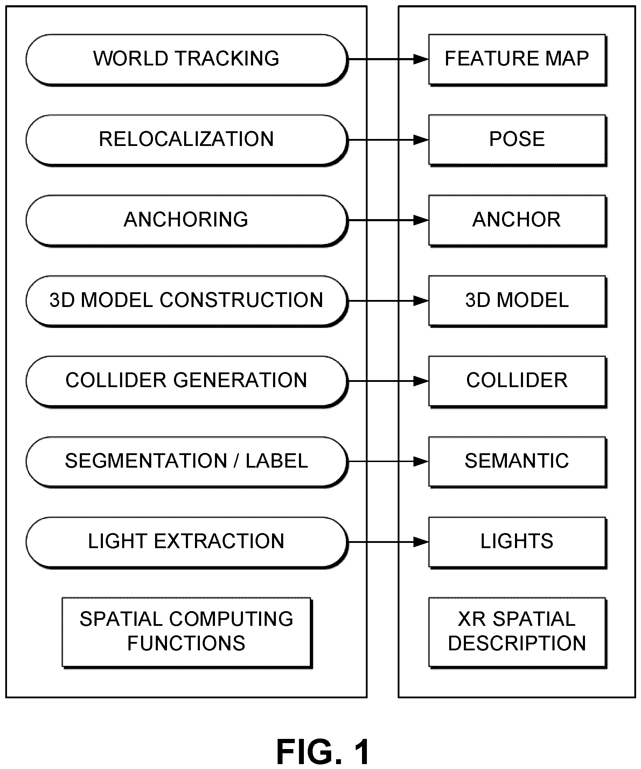

The on-going 3GPP TR 26.819, "Spatial Computing for AR Services," defines spatial computing functions summarized in FIG. 1.

The TR 26.812 defines Quality-of-Experience (QoE) metrics for AR/MR Services related to XR Spatial computing. These metrics include the following:
- Registration latency
- Scene startup latency and Interaction latency
- Pose error and time error
- Tracking pose prediction error
- Trackable Creation Delay
- Trackable Detection to Render to Photon
- Trackable Untracked Ratio

Other key performance indicators (KPI) and metrics to measure the fidelity and accuracy of the XR spatial computing function could be computed.

In the TR 26.998, "Support of 5G Glass-type Augmented Reality / Mixed Reality (AR/MR) Devices," the 3GPP TSG SA WG4 (SA4) has studied different architectures for enabling XR Spatial Computing.

XR Spatial Computing processes may be carried out entirely on the XR device (UE). However, it may be beneficial or necessary to use cloud or edge resources to support XR Spatial Computing functions. Different scenario are possible following UE capabilities.

In one scenario, XR Spatial Computing may be done on the AR device, but an XR Spatial Description server is used for storage and retrieval of XR Spatial Description.

In another scenario, at least parts of the XR Spatial Computing functions are offloaded to an XR Spatial Computing server when the UE is limited in processing power, or when it is desirable to carry out complex XR computation functionalities.

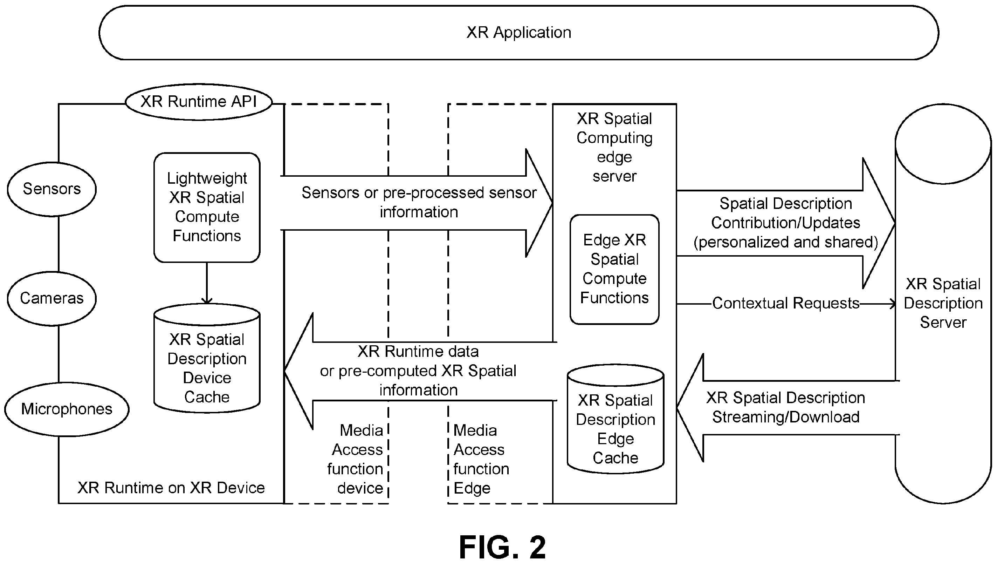

FIG. 2 illustrates a basic architecture for the case where XR Spatial Computing is delegated partially or completely to an XR Spatial Computing edge server. In this architecture, the UE sends sensor data or pre-processed sensor data (e.g. captured frames or visual features extracted from such frames) to the XR Spatial Computing edge server. The XR Spatial Computing edge server carries out supporting functions to extract relevant information, and it returns XR Spatial Computing-related XR Runtime data (according to the XR Runtime API). Such data may include, e.g., pose information, or pre-computed XR Spatial information that is used by a lightweight XR Spatial Compute function on the device to create AR Runtime data. Pre-computed XR Spatial information may be, for example, a dense map of segmented objects for visualization, labels or IDs of recognized objects, 2D contours of recognized objects to highlight them, or labels of the recognized user activity, among other possibilities. The XR Spatial Computing edge server may further fetch the XR Spatial Description from the XR Spatial Description server and perform XR spatial computing based on device sensor data.

### SUMMARY

Briefly stated, in one embodiment a method performed by a user equipment, UE, comprises, during an extended reality, XR, spatial computing session between the UE and a server: providing at least a first sensor data stream from the UE to the server using at least a first sensor data setting; communicating, between the UE and the server, information indicating an updated first sensor data setting; in response to the communication between the UE and the server, updating the first sensor data setting to the updated first sensor data setting; and continuing to provide the first sensor data stream from the UE to the server using the updated first sensor data setting.

A user equipment, UE, apparatus according to some embodiments comprises one or more processors configured to perform at least, during an extended reality, XR, spatial computing session between the UE and a server: providing at least a first sensor data stream from the UE to the server using at least a first sensor data setting; communicating, between the UE and the server, information indicating an updated first sensor data setting; in response to the communication between the UE and the server, updating the first sensor data setting to the updated first sensor data setting; and continuing to provide the first sensor data stream from the UE to the server using the updated first sensor data setting.

A method performed by a server according to some embodiments comprises, during an extended reality, XR, spatial computing session between the server and a user equipment, UE: receiving at least a first sensor data stream from the UE using at least a first sensor data setting; communicating, between the UE and the server, information indicating an updated first sensor data setting; in response to the communication between the UE and the server, updating the first sensor data setting to the updated first sensor data setting; and continuing to receive the first sensor data stream from the UE using the updated first sensor data setting.

A server apparatus according to some embodiments comprises one or more processors configured to perform at least, during an extended reality, XR, spatial computing session between the server and a user equipment, UE: receiving at least a first sensor data stream from the UE using at least a first sensor data setting; communicating, between the UE and the server, information indicating an updated first sensor data setting; in response to the communication between the UE and the server, updating the first sensor data setting to the updated first sensor data setting; and continuing to receive the first sensor data stream from the UE using the updated first sensor data setting.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 schematically illustrates XR Spatial Computing functions defined in TR 26.819.
FIG. 2 is a functional diagram for XR Spatial Computing with XR Spatial Compute edge.
FIG. 3 is a call flow diagram of an XR Spatial Compute Pipeline.
FIG. 4 is a call flow diagram illustrating high-level functional steps of a sensor data adjustment mechanism according to some embodiments.
FIG. 5 is a flow diagram of a method performed by a UE in some embodiments.
FIG. 6 is a schematic illustration of a data structure used for sensor data setting adjustments according to some embodiments.
FIG. 7 is a schematic illustration of an acknowledgement data structure used in some embodiments.
FIG. 8 is a flow diagram of a method performed by a server in some embodiments.
FIG. 9 is a functional block diagram of a system that may be used to implement a UE or a server according to embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

### Overview of XR Spatial Computing

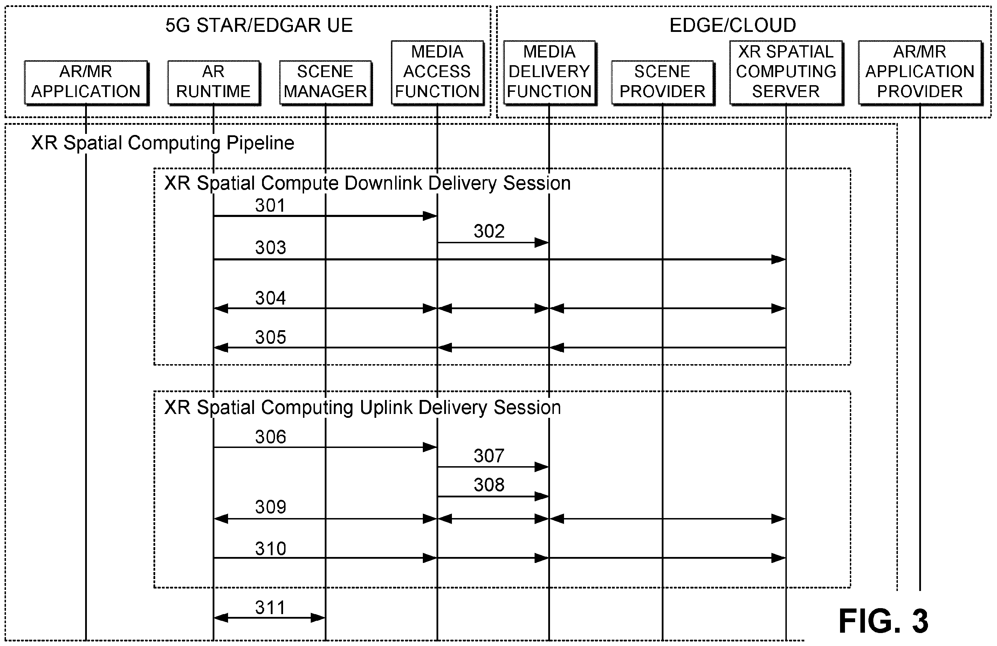

An overview of a call flow and procedure for XR Spatial Computing in an Edge/Cloud server is shown in FIG. 3. For a XR Spatial Compute downlink delivery session, at 301, the XR Spatial Compute function in the AR Runtime asks the media access function (MAF) to establish an XR Spatial Compute downlink delivery session. At 302, the MAF communicates with the network to establish the proper resources and QoS. At 303, the XR Spatial Compute function requests access to XR Spatial Description information. At 304, an XR Spatial Description downlink delivery session is established across the XR Spatial Computing server, the media delivery function, the media access function and XR Spatial Compute function on the device. At 305, XR Spatial Description information is delivered in this downlink delivery session.

For an XR Spatial Compute uplink delivery session, at 306, the XR Spatial Compute function in the AR Runtime asks the MAF to establish a XR Spatial Compute uplink delivery session. At 307, the MAF communicates with the network to establish the proper resources and QoS. At 308, the MAF establishes an appropriate uplink delivery pipeline. At 309, an XR Spatial Description uplink delivery session is established across the XR Spatial Compute function on the device, the media access function, the media delivery function and the XR Spatial Computing server. At 310, XR Spatial computing information is upstreamed to the XR Spatial Computing server. At 311, data is continuously exchanged between the Scene Manager and the AR Runtime.

### Issues Addressed in Some Embodiments

XR Spatial computing performed at an Edge/Cloud server makes use of XR Spatial computing information from UE sensors such as a camera, LiDAR, inertial measurement unit (IMU), or other sensors. In the procedure described with reference to FIG. 3, the Spatial computing information (e.g. sensor data) is streamed to an XR spatial computing server in an Application Server (AS) at 310. The quality (e.g. encoding parameter, picture resolution, number of primitives of the raw mesh) of sensor data from the UE could be adjusted according to various criteria. These criteria may include, among others:
- The desired precision of the Spatial Description information based on XR spatial computing KPI/metrics.
- Network conditions (e.g., congestion).
- Device movement, user mobility.
- Environmental parameters (e.g., evolving lighting, mobility of real objects around the user).

Changing the quality of the transmitted sensor data may have an impact on the data throughput. However, there is no well-defined way of adapting the sensor data streams between the UE and the AS. The present disclosure provides apparatus and methods that allow the AS to adjust the settings of the sensor data stream from the UE. The modification of the sensor data stream settings (e.g. encoding and decoding processes) may impact the data throughput, and the metrics/KPI based on latency.

In this disclosure, a User Equipment (UE) may correspond to any extended Reality (XR) device/node which may come in variety of form factors. A typical UE (e.g., XR UE) may include, but is not limited to, the following: Head Mounted Displays (HMD), optical see-through glasses and camera see-through HMDs for Augmented Reality (AR) and mixed Reality (MR), mobile devices with positional tracking and camera, wearables, and the like. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any XR applications/experience/services.

The present disclosure provides apparatus and methods to adapt the sensor data, used for remote XR spatial computing, based on metrics/KPI (e.g., spatial error metric). In example embodiments, this mechanism makes use of message formats exchanged between the XR device in the User Equipment (UE) and the Application Server (AS) at the configuration stage and during the runtime.

Example embodiments make use of sensor data, which may be issued from the XR Runtime of the device such as raw and/or precomputed sensor data (e.g., camera feed, depth map, point cloud, initial 3D mesh of the real environment). These data may potentially be encoded. These data may also be referred to as "Spatial compute information".

Example embodiments make use of a sensor data stream, which is a data flow from a device sensor transmitted to the application server for remote XR spatial computing.

Example embodiments make use of metric measurements for proper sensor data adjustment and message formats exchanged between the XR device in the User Equipment (UE) and the Application Server (AS) at the configuration stage (described above in the section "Configuration of the Sensor Data Adjustment") and during the runtime (described above in the section "Decision on the Sensor Data Adjustment").

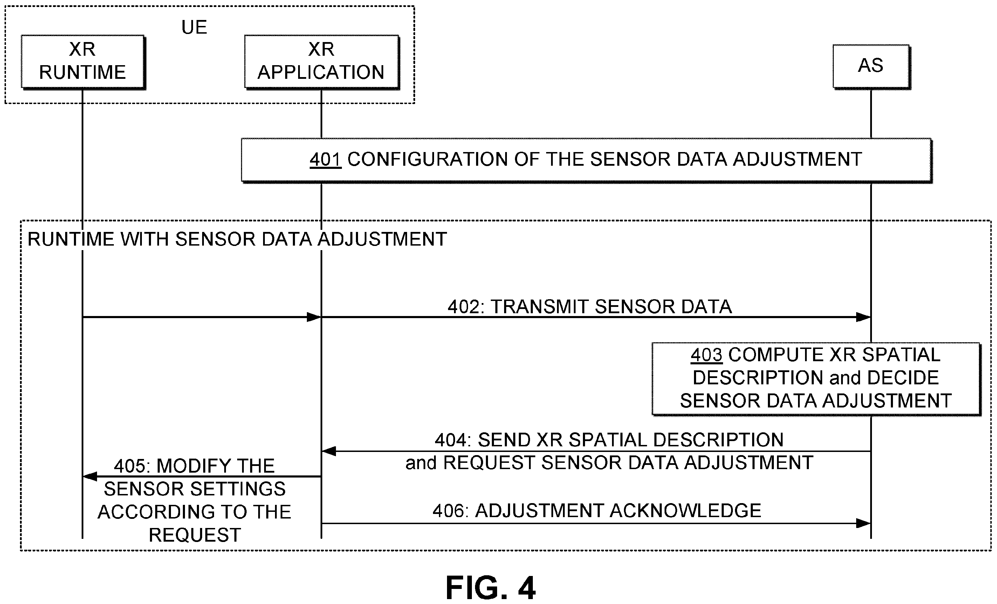

FIG. 4 illustrates a call flow according to an example embodiment. At 401, the XR session is established between the UE and the AS. The configuration of the sensor data adjustment, described in the section "Configuration of the Sensor Data Adjustment", is exchanged between the UE and the AS. At 402, the UE sends sensor data for XR Spatial computing to the AS. This process may correspond to the step 310 of FIG. 3. The UE may make use of an XR Runtime to send the sensor data. The XR Runtime may correspond to the AR Runtime of FIG. 3. At 403, the XR Spatial computing functions in the AS use the sensor data to compute an XR Spatial Description. A trigger to adapt the sensor data occurs at the AS. The trigger may be, for example, issued from a QoE metric measurement related to the XR Spatial computing function. The AS decides whether a sensor data adjustment is called for and determines the new sensor stream parameters. At 404, the AS sends the computed XR Spatial Description to the UE. This process may correspond to the step 305 of FIG. 3. The AS may send the request to adjust the sensor data with the new sensor parameters to the UE. At 405, the UE changes the sensor parameters according to the adjustment request. The UE may use the XR runtime API to adjust parameters of the XR runtime. At 406, the UE sends an acknowledgment of the sensor data adjustment including the current sensor state.

### Configuration of the Sensor Data Adjustment

In an example embodiment, some or all of the configuration data as illustrated in Table 2 is exchanged between the UE and the AS with a configuration message transmitted during the establishment of the XR session. The configuration data may be sent from the UE to the AS, or from the AS to the UE. The exchange of this data between the UE and the AS at the configuration step are performed to enable the transmission of adjustment request and acknowledge data at the runtime during the XR spatial computing pipeline (illustrated in FIG. 3).

**Table 2: Configuration data for sensor data adjustment**

| **Name** | **Type** | **Cardinality** | **Description** |
|---|---|---|---|
| sensorsDataAdjConfig | object | 1..1 | An object containing the configuration information for the sensor data adjustment. |
| sensorStreams | array | 1..1 | An array of the sensor data streams from the UE to the AS. |
| sensorStreamld | string | 1..1 | The name or a unique identifier of the sensor data stream within the scope of the XR spatial computing session. |
| periodicity | string | 1..1 | The periodicity of the sensor data adjustment for those settings. It may be expressed as a multiple of the sensor data samples, refresh rate or frame rate e.g., |
| | | | "EVERY 3 SAMPLES". |
| settings | array | 1..1 | An array of the sensor data settings that can be adjusted to change the data of this sensor data stream. |
| settingld | string | 1..1 | The name or a unique identifier of the sensor data stream setting within the scope of the XR spatial computing session. |
| initialVal | string | 0..1 | The initial value of this sensor data stream setting. |
| range | object | 1..1 | Supported range of the sensor data setting depending on whole or subset capabilities of the sensor. That may be an interval [min, max] or an increasing ordered list of permitted values. |

In some embodiments, the periodicity may be set per sensor stream setting, e.g. for each "settingld".

### Decision on the Sensor Data Adjustment

In an example embodiment, the AS may make a determination to trigger a sensor data adjustment based on some or all of the following conditions:
- Quality metrics (e.g. KPI) related to the XR Spatial computing functions are outside an acceptable range.
- Network conditions (e.g., congestion).
- Device movement, user mobility.
- Environmental parameters (e.g., evolving lighting, mobility of real objects around the user).

As an example, the relocalization function allows for estimation of the pose of the AR device (the UE) by using sensor data such as cameras captures (images) and camera parameters (e.g., intrinsic parameters). A metric representing tracking pose prediction error may be measured to check the precision of the estimated pose. If the tracking pose prediction error is too high, e.g. due to blurred or over-exposed images, the AS may make a determination to change camera settings (e.g. increase the camera capture resolution, exposure, shutter speed) or picture encoding settings (e.g., JPEG quality parameter) to get a better image quality.

In an example embodiment, the trigger to send the sensor data adjustment message is based on the configured periodicity. In this case, the AS determines a new sensor data stream settings value and sends a sensor data adjustment request to the UE, as described in the section "Sending the Sensor Data Adjustment Request".

In another embodiment, the UE may make a determination to adjust the sensor data and notify the AS of the new sensor data stream settings. The determination may be made in response to a trigger condition such as a change in the network conditions or a change of device movements. In this example, the UE determines the new sensor data stream settings value and informs the AS, as described in the section "Acknowledgement/information of the Sensor Data Adjustment".

### Sending the Sensor Sata Adjustment Request

In a case where the AS determines a sensor data adjustment, the AS determines the new sensor data setting value inside the allowed range. The AS sends an adjustment request message to the UE with the new sensor data setting value. In an example embodiment, this information may be sent using some or all of the data shown in the message format shown in Table 3. The adjustment request message may be transmitted by using a WebRTC data channel.

**Table 3: Request and notification data for sensor data adjustment**

| **Name** | **Type** | **Cardinality** | **Description** |
|---|---|---|---|
| sensorsDataAdj Req | object | 1..1 | An object containing the request or notification information for the sensor data adjustment. |
| adjustmentId | string | 1..1 | An identifier of the adjustment message unique within the scope of the XR Spatial Computing session. |
| sensorStreams | array | 1..1 | An array of the sensor data streams that need to be adjusted. |
| sensorStreamId | string | 1..1 | The name or a unique identifier of the sensor data stream within the scope of the XR spatial computing session. |
| adjustmentReq | array | 1..1 | An array of the sensor data settings that are adjusted to change the data of this sensor data stream. |
| settingld | string | 1..1 | The name or a unique identifier of the sensor data setting within the scope of the XR spatial computing session. |
| value | string | 1..1 | The new target value or a list or a range of values of this sensor data setting. |

### Acknowledgment Information of the Sensor Data Adjustment

In a case where the UE has processed a sensor data adjustment request from the AS, the UE may send a corresponding adjustment acknowledgment message to the AS. The acknowledgement message may include some or all of the data shown in Table 4.

In another embodiment, the UE may make a determination to adjust the sensor data and to inform the AS of the new sensor data stream settings using the adjustment information message with data such as that shown in Table 4. In case of concurrent adjustments between UE-initiated adjustment and AS adjustment request: in a case where the AS receives a UE-initiated adjustment indication while there is an ongoing AS adjustment request, and the AS is waiting for an acknowledge, as one embodiment, the AS adjustment request will have precedence or be implemented by the UE if it differs from UE current adjustment settings. The adjustment acknowledgment/ information message may be transmitted by using a dedicated WebRTC data channel.

**Table 4: Acknowledgement/information data for sensor data adjustment**

| **Name** | **Type** | **Cardinality** | **Description** |
|---|---|---|---|
| sensorsDataAdjInd | object | 1..1 | An object containing for acknowledgement (ACK), information (INF), acceptance (OK) or rejection (NOK) of a sensor data adjustment. |
| adjustmentId | string | 1..1 | An identifier of the adjustment message unique within the scope of the XR Spatial Computing session. |
| | | | For messages indicating acceptance, acknowledgment or rejection, this identifier may correspond to the identifier created at the request. |
| sensorStreams | array | 1..1 | An array of the sensor data streams that are adjusted. |
| sensorStreamId | string | 1..1 | The name or a unique identifier of the sensor data stream within the scope of the XR spatial computing session. |
| adjustmentInd | array | 1..1 | An array of the sensor data settings that are adjusted to change the data of this sensor data stream. |
| settingld | string | 1..1 | The name or a unique identifier of the sensor data setting within the scope of the XR spatial computing session. |
| ack | string | 0..1 | Status of the adjustment of the sensor data setting. Could be for example: |
| | | | - "ADJUST_SETTING_DONE", |
| | | | - "ADJUST SETTING FAILED". |
| state | string | 0..1 | The current value of sensor data setting. This information may be useful to the XR Spatial Computing function, especially in the case when an adjustment has failed. |

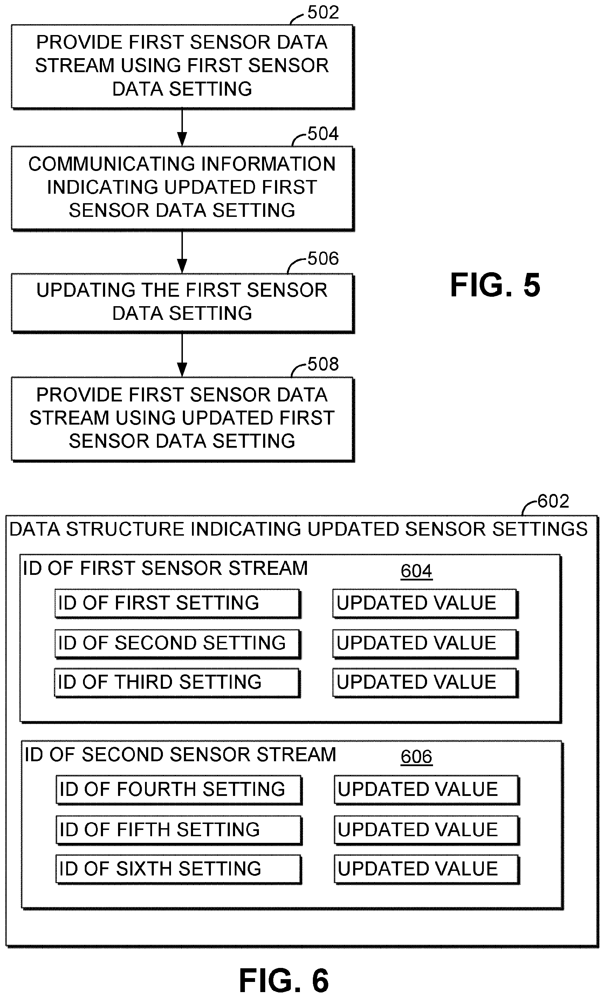

FIG. 5 is a flow chart illustrating an example of a method performed by a user equipment, UE, according to some embodiments. During an extended reality, XR, spatial computing session between the UE and a server, at 502, the UE provides at least a first sensor data stream from the UE to the server using at least a first sensor data setting. At 504, communication is conducted between the UE and the server to provide information indicating an updated first sensor data setting. In some embodiments, the information indicating the updated first sensor data setting is sent from the UE to the server. In some embodiments, the information indicating the updated first sensor data setting is sent from the server to the UE.

At 506, in response to the communication between the UE and the server, the first sensor data setting is updated to the updated first sensor data setting. At 508, the UE continues to provide the first sensor data stream from the UE to the server using the updated first sensor data setting.

A user equipment, UE, apparatus according to some embodiments comprises one or more processors configured to perform a method as described in FIG. 5.

In some embodiments, the information indicating the updated first sensor data setting comprises a data structure including an identifier of the first sensor data stream; an identifier of the first sensor data setting; and a value of the updated first sensor data setting.

In some embodiments, the data structure includes a first array, each element of the first array including a respective identifier of a respective sensor data stream, and wherein each element of the first array is associated with a second array, each element of the second array including a respective identifier of a respective sensor data setting and a corresponding value of the respective sensor data setting. FIG. 6 schematically illustrates a logical structure of a data structure used in some embodiments. The data structure may include sensor data setting information for a plurality of sensor data streams. For example, in FIG. 6, a data structure 602 includes information 604 related to a first sensor data stream and information 606 related to a second sensor data stream. Each sensor data stream may be associated with one or more sensor data settings. In the example of FIG. 6, the first sensor data stream is associated with first, second, and third sensor data settings, and the data structure provides updated values for each of those settings; and the second sensor data stream is associated with fourth, fifth, and sixth sensor data settings, and the data structure provides updated values for each of those settings. The data structure does not necessarily include information for all sensor data streams or for all sensor data settings of those sensor data streams; instead, it may include only those sensor data streams for which at least one sensor data setting is being updated, and it may include information only for each of the sensor data settings being updated. For example, the second sensor data stream may also be associated with a seventh sensor data setting, but no information about that setting is included in the data structure 602 because that setting is not being updated. Similarly, there may be a third sensor data stream, but no information about that sensor data stream is included in the data structure 602 because no settings associated with that stream are being updated. A data structure such as that represented schematically in FIG. 6 may also include additional information, such as any or all of the information shown in Table 3, above.

Some embodiments further comprise, before the extended reality, XR, spatial computing session between the UE and the server: communicating, between the UE and the server, configuration information indicating a periodicity of updates to the first sensor data setting, an initial value of the first sensor data setting, and a supported range of the first sensor data setting.

In some embodiments, the communicating of the information indicating the updated first sensor data setting is performed in response to at least one of: a quality metric, a network condition, user device movement, or an environmental parameter.

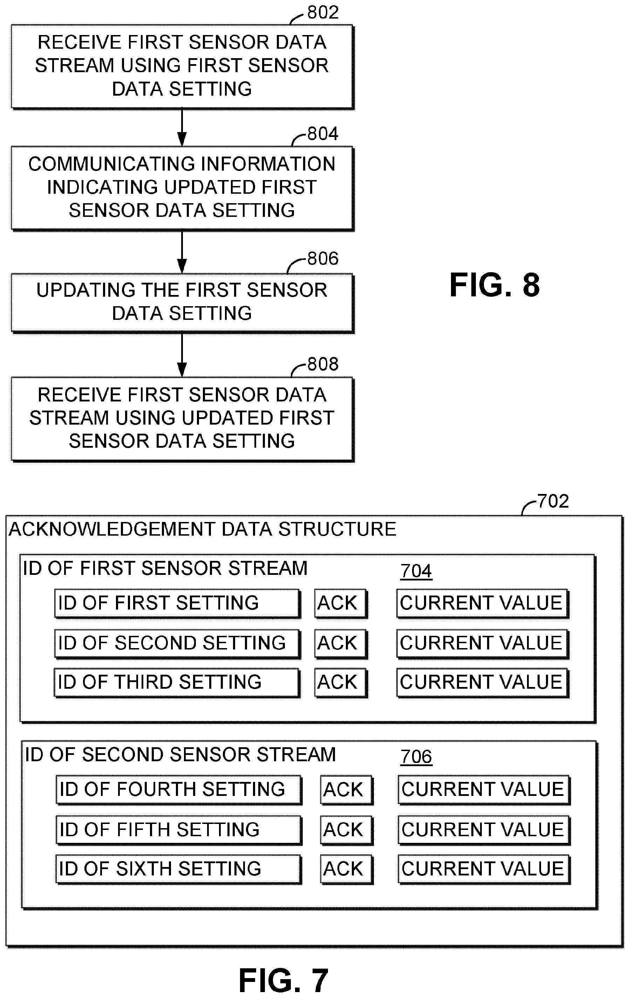

Some embodiments further include communicating an acknowledgement in response to the communicating of the information indicating the updated first sensor data setting, wherein the acknowledgment includes a third array, each element of the third array including a respective identifier of a respective sensor data stream, and wherein each element of the third array is associated with a fourth array, each element of the fourth array including a respective identifier of a respective sensor data setting and a corresponding current value of the respective sensor data setting. FIG. 7 schematically illustrates a logical structure of an acknowledgement data structure used in some embodiments. The acknowledgement may include acknowledgement information for a plurality of sensor data streams. For example, in FIG. 7, an acknowledgement 702 includes information 704 related to a first sensor data stream and information 706 related to a second sensor data stream. Each sensor data stream may be associated with one or more sensor data settings. In the example of FIG. 7, the first sensor data stream is associated with first, second, and third sensor data settings, and for each of those settings the data structure provides status information "ACK" indicating the status of the adjustment, e.g. whether it succeeded or failed; and the second sensor data stream is associated with fourth, fifth, and sixth sensor data settings, and or each of those settings the data structure provides status information "ACK" indicating the status of the adjustment. For each of the sensor data settings, the acknowledgement may provide information indicating the current value of the setting after the adjustment has been completed (or has failed). The data structure does not necessarily include information for all sensor data streams or for all sensor data settings of those sensor data streams; instead, it may include only those sensor data streams which were present in the adjustment (e.g. the data structure 602) being acknowledged. An acknowledgement such as that represented schematically in FIG. 7 may also include additional information, such as any or all of the information shown in Table 4, above.

FIG. 8 is a flow chart of a method performed by a server according to some embodiments during an extended reality, XR, spatial computing session between the server and a user equipment, UE. At 802, the server receives at least a first sensor data stream from the UE using at least a first sensor data setting. At 804, the UE and the server communicate information indicating an updated first sensor data setting. At 806, in response to the communication between the UE and the server, the first sensor data setting is updated to the updated first sensor data setting. At 808, the server continues to receive the first sensor data stream from the UE using the updated first sensor data setting.

A server apparatus according to some embodiments comprises one or more processors configured to perform the method of FIG. 8.

### Example Systems

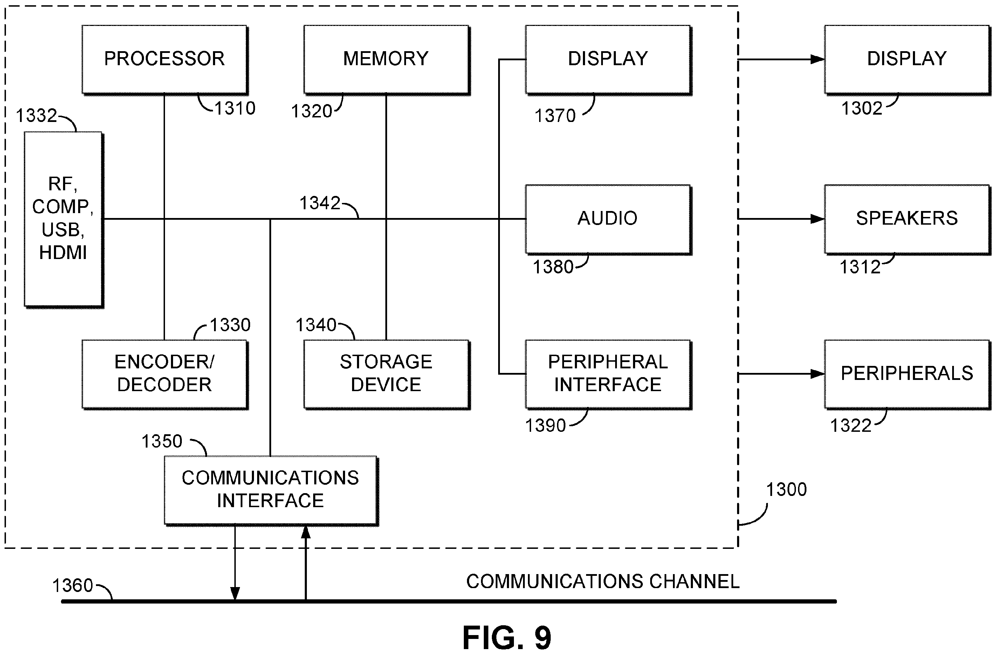

Some embodiments may be implemented on a system of one or more processors as illustrated in FIG. 9. FIG. 9 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (12C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further Embodiments

A method performed by a user equipment, UE, according to some embodiments comprises, during an extended reality, XR, spatial computing session between the UE and a server: providing at least a first sensor data stream from the UE to the server using at least a first sensor data setting; communicating, between the UE and the server, information indicating an updated first sensor data setting; in response to the communication between the UE and the server, updating the first sensor data setting to the updated first sensor data setting; and continuing to provide the first sensor data stream from the UE to the server using the updated first sensor data setting.

A user equipment, UE, apparatus according to some embodiments comprises one or more processors configured to perform at least, during an extended reality, XR, spatial computing session between the UE and a server: providing at least a first sensor data stream from the UE to the server using at least a first sensor data setting; communicating, between the UE and the server, information indicating an updated first sensor data setting; in response to the communication between the UE and the server, updating the first sensor data setting to the updated first sensor data setting; and continuing to provide the first sensor data stream from the UE to the server using the updated first sensor data setting.

In some embodiments, communicating the information indicating an updated first sensor data setting comprises sending the information indicating the updated first sensor data setting from the UE to the server.

In some embodiments, communicating the information indicating an updated first sensor data setting comprises sending the information indicating the updated first sensor data setting from the server to the UE.

In some embodiments, the information indicating the updated first sensor data setting comprises a data structure including: an identifier of the first sensor data stream; an identifier of the first sensor data setting; and a value of the updated first sensor data setting.

In some embodiments, the data structure includes a first array, each element of the first array including a respective identifier of a respective sensor data stream, and wherein each element of the first array is associated with a second array, each element of the second array including a respective identifier of a respective sensor data setting and a corresponding value of the respective sensor data setting.

Some embodiments further comprise, before the extended reality, XR, spatial computing session between the UE and the server: communicating, between the UE and the server, configuration information indicating a periodicity of updates to the first sensor data setting, an initial value of the first sensor data setting, and a supported range of the first sensor data setting.

In some embodiments, the communicating of the information indicating the updated first sensor data setting is performed in response to at least one of: a quality metric, a network condition, user device movement, or an environmental parameter.

Some embodiments further include communicating an acknowledgement in response to the communicating of the information indicating the updated first sensor data setting, wherein the acknowledgment includes a third array, each element of the third array including a respective identifier of a respective sensor data stream, and wherein each element of the third array is associated with a fourth array, each element of the fourth array including a respective identifier of a respective sensor data setting and a corresponding current value of the respective sensor data setting.

A method performed by a server according to some embodiments comprises, during an extended reality, XR, spatial computing session between the server and a user equipment, UE: receiving at least a first sensor data stream from the UE using at least a first sensor data setting; communicating, between the UE and the server, information indicating an updated first sensor data setting; in response to the communication between the UE and the server, updating the first sensor data setting to the updated first sensor data setting; and continuing to receive the first sensor data stream from the UE using the updated first sensor data setting.

A server apparatus according to some embodiments comprises one or more processors configured to perform at least, during an extended reality, XR, spatial computing session between the server and a user equipment, UE: receiving at least a first sensor data stream from the UE using at least a first sensor data setting; communicating, between the UE and the server, information indicating an updated first sensor data setting; in response to the communication between the UE and the server, updating the first sensor data setting to the updated first sensor data setting; and continuing to receive the first sensor data stream from the UE using the updated first sensor data setting.

In some embodiments, the information indicating the updated first sensor data setting comprises a data structure including: an identifier of the first sensor data stream; an identifier of the first sensor data setting; and a value of the updated first sensor data setting.

In some embodiments, the data structure includes a first array, each element of the first array including a respective identifier of a respective sensor data stream, and wherein each element of the first array is associated with a second array, each element of the second array including a respective identifier of a respective sensor data setting and a corresponding value of the respective sensor data setting.

Some embodiments further comprise, before the extended reality, XR, spatial computing session between the UE and the server: communicating, between the UE and the server, configuration information indicating a periodicity of updates to the first sensor data setting, an initial value of the first sensor data setting, and a supported range of the first sensor data setting.

Some embodiments further comprise communicating an acknowledgement in response to the communicating of the information indicating the updated first sensor data setting, wherein the acknowledgment includes a third array, each element of the third array including a respective identifier of a respective sensor data stream, and wherein each element of the third array is associated with a fourth array, each element of the fourth array including a respective identifier of a respective sensor data setting and a corresponding current value of the respective sensor data setting.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method performed by a user equipment, UE, comprising:
during an extended reality, XR, spatial computing session between the UE and a server:
providing at least a first sensor data stream from the UE to the server using at least a first sensor data setting;
communicating, between the UE and the server, information indicating an updated first sensor data setting;
in response to the communication between the UE and the server, updating the first sensor data setting to the updated first sensor data setting; and
continuing to provide the first sensor data stream from the UE to the server using the updated first sensor data setting.

2. A user equipment, UE, apparatus comprising one or more processors configured to perform at least:
during an extended reality, XR, spatial computing session between the UE and a server:
providing at least a first sensor data stream from the UE to the server using at least a first sensor data setting;
communicating, between the UE and the server, information indicating an updated first sensor data setting;
in response to the communication between the UE and the server, updating the first sensor data setting to the updated first sensor data setting; and
continuing to provide the first sensor data stream from the UE to the server using the updated first sensor data setting.

3. The method of claim 1 or the apparatus of claim 2, wherein communicating the information indicating an updated first sensor data setting comprises sending the information indicating the updated first sensor data setting from the UE to the server.

4. The method of claim 1 or the apparatus of claim 2, wherein communicating the information indicating an updated first sensor data setting comprises sending the information indicating the updated first sensor data setting from the server to the UE.

5. The method of claim 1, or claims 3-4 as they depend from claim 1, or the apparatus of claim 2, or claims 3-4 as they depend from claim 2, wherein the information indicating the updated first sensor data setting comprises a data structure including:
an identifier of the first sensor data stream;
an identifier of the first sensor data setting; and
a value of the updated first sensor data setting.

6. The method of claim 5 as it depends from claim 1, or the apparatus of claim 5 as it depends from claim 2, wherein the data structure includes a first array, each element of the first array including a respective identifier of a respective sensor data stream, and wherein each element of the first array is associated with a second array, each element of the second array including a respective identifier of a respective sensor data setting and a corresponding value of the respective sensor data setting.

7. The method of claim 1 or claims 2-6 as they depend from claim 1, or the apparatus of claim 2, or claims 2-6 as they depend from claim 2, further comprising, before the extended reality, XR, spatial computing session between the UE and the server:
communicating, between the UE and the server, configuration information indicating a periodicity of updates to the first sensor data setting, an initial value of the first sensor data setting, and a supported range of the first sensor data setting.

8. The method of claim 1 or claims 2-7 as they depend from claim 1, or the apparatus of claim 2, or claims 2-7 as they depend from claim 2, wherein the communicating of the information indicating the updated first sensor data setting is performed in response to at least one of: a quality metric, a network condition, user device movement, or an environmental parameter.

9. The method of claim 1 or claims 2-8 as they depend from claim 1, or the apparatus of claim 2, or claims 2-8 as they depend from claim 2, further comprising communicating an acknowledgement in response to the communicating of the information indicating the updated first sensor data setting, wherein the acknowledgment includes a third array, each element of the third array including a respective identifier of a respective sensor data stream, and wherein each element of the third array is associated with a fourth array, each element of the fourth array including a respective identifier of a respective sensor data setting and a corresponding current value of the respective sensor data setting.

10. A method performed by a server, comprising:
during an extended reality, XR, spatial computing session between the server and a user equipment, UE:
receiving at least a first sensor data stream from the UE using at least a first sensor data setting;
communicating, between the UE and the server, information indicating an updated first sensor data setting;
in response to the communication between the UE and the server, updating the first sensor data setting to the updated first sensor data setting; and
continuing to receive the first sensor data stream from the UE using the updated first sensor data setting.

11. A server apparatus comprising one or more processors configured to perform at least:
during an extended reality, XR, spatial computing session between the server and a user equipment, UE:
receiving at least a first sensor data stream from the UE using at least a first sensor data setting;
communicating, between the UE and the server, information indicating an updated first sensor data setting;
in response to the communication between the UE and the server, updating the first sensor data setting to the updated first sensor data setting; and
continuing to receive the first sensor data stream from the UE using the updated first sensor data setting.

12. The method of claim 10 or the apparatus of claim 11, wherein the information indicating the updated first sensor data setting comprises a data structure including:
an identifier of the first sensor data stream;
an identifier of the first sensor data setting; and
a value of the updated first sensor data setting.

13. The method of claim 12 as it depends from claim 10, or the apparatus of claim 12 as it depends from claim 11, wherein the data structure includes a first array, each element of the first array including a respective identifier of a respective sensor data stream, and wherein each element of the first array is associated with a second array, each element of the second array including a respective identifier of a respective sensor data setting and a corresponding value of the respective sensor data setting.

14. The method of claim 10 or claims 12-13 as they depend from claim 10, or the apparatus of claim 11, or claims 12-13 as they depend from claim 11, further comprising, before the extended reality, XR, spatial computing session between the UE and the server:
communicating, between the UE and the server, configuration information indicating a periodicity of updates to the first sensor data setting, an initial value of the first sensor data setting, and a supported range of the first sensor data setting.

15. The method of claim 10 or claims 12-14 as they depend from claim 10, or the apparatus of claim 11, or claims 12-14 as they depend from claim 11, further comprising communicating an acknowledgement in response to the communicating of the information indicating the updated first sensor data setting, wherein the acknowledgment includes a third array, each element of the third array including a respective identifier of a respective sensor data stream, and wherein each element of the third array is associated with a fourth array, each element of the fourth array including a respective identifier of a respective sensor data setting and a corresponding current value of the respective sensor data setting.
